# EUROPEAN PATENT SPECIFICATION

(11) **EP 4 067 845 B1**
(45) Date of publication and mention of the grant of the patent: **31.12.2025**
(21) Application number: 19954703.5
(22) Date of filing: 29.11.2019
(51) Int. Cl.: G01J 3/52, G06V 10/56, G06V 10/60, G06V 40/00

(54) **SKIN COLOR CHART AND METHOD FOR PREPARING SAME**
HAUTFARBTAFEL UND VERFAHREN ZUM HERSTELLEN DAVON
ÉCHELLE DE COULEURS DE LA PEAU ET SON PROCÉDÉ DE PRÉPARATION

(43) Date of publication of application: 05.10.2022
(73) Proprietor: NEC Corporation, 108-8001 Tokyo (JP)
(72) Inventor: FUNAYAMA Chisato, Tokyo 108-8001 (JP)
(74) Representative: Betten & Resch
(86) International application number: PCT/JP2019/046773
(87) International publication number: WO 2021/106192

(56) References cited:
- JP-A- 2001 074 556
- JP-A- 2004 112 649
- JP-A- 2006 081 846
- US-A1- 2002 128 780
- US-A1- 2009 080 004
- US-A1- 2015 245 009
- "Color Management & Quality Output: Working with Color from Camera to Display to Print", 15 February 2014, FOCAL PRESS, ISBN: 978-0-240-82111-5, article TOM ASHE: "Color Management & Quality Output: Working with Color from Camera to Display to Print", pages: ToC,Ch01-Ch02,Ch04 - Ch09,Ind, XP055652848
- "Reference Data for ColorChecker SG before November 2014", 4 December 2004 (2004-12-04), pages 1 - 3, Retrieved from the Internet <URL:https://www.xrite.com/de/service-support/new_color_specifications_for_colorchecker_sg_and_classic_charts> [retrieved on 20221128]
- SOHAIB ALI ET AL: "Colour quality of facial prostheses in additive manufacturing", THE INTERNATIONAL JOURNAL OF ADVANCED MANUFACTURING TECHNOLOGY, SPRINGER, LONDON, vol. 96, no. 1, 1 February 2018 (2018-02-01), pages 881 - 894, XP036468890, ISSN: 0268-3768, [retrieved on 20180201], DOI: 10.1007/S00170-017-1480-X
- YANG UKIL, BONGJOE KIM, KAR-ANN TOH, KWANGHOON SOHN: "Illumination-invariant color space and its application to skin-color detection", OPTICAL ENGINEERING, vol. 49, no. 10, 1 October 2010 (2010-10-01), pages 1 - 10, XP055830448, ISSN: 0091-3286, DOI: 10.1117/1.3497058

## Description

### Technical Field

The present disclosure relates to a skin color chart and a method for manufacturing the same.

### Background Art

In recent years, a face authentication system that specifies a person by using a face image of the person captured by a camera has been developed. Note that, in the face image of a person with white skin such as Caucasoid, blown-out highlights tend to occur in a bright environment, and in the face image of a person with black skin such as Negroid, blocked-up shadows tend to occur in a dark environment.

When such blown-out highlights or blocked-up shadows occur in the face image, face authentication may not be performed accurately. Therefore, for example, when a camera for a face authentication system is installed, it is necessary to determine whether or not the environment for performing face authentication (hereinafter referred to as a face authentication environment) is appropriate. The face authentication environment varies depending on, for example, the position where a camera is installed, the orientation of the camera, and the brightness of a place where a face image is captured.

Incidentally, Patent Literature 1 discloses a skin color chart for evaluating skin color reproduction in a color photograph or the like.

Note that, in this specification, the terms "Negroid", "Caucasoid", and "Mongoloid" are used in order to describe differences in skin color; however, the use of these terms is not intended to discriminate against any race. Tom Ashe: "Color Management & Quality Output: Working with Color from Camera to Display to Print" In: "Color Management & Quality Output: Working with Color from Camera to Display to Print", 15 February 2014 (2014-02-15), Focal Press, XP055652848, ISBN: 978-0-240-82111-5, and & "Reference Data for ColorChecker SG before November 2014", https://www.xrite.com/de/service-support/new_color_specifications_for_colorchecker_sg_and_classic_ch arts discloses a skin color chart according to the preamble of claim 1. A skin color chart according to the preamble of claim 1 is also disclosed in SOHAIB ALI ET AL: "Colour quality of facial prostheses in additive manufacturing", THE INTERNATIONAL JOURNAL OF ADVANCED MANUFACTURING TECHNOLOGY, SPRINGER, LONDON, vol. 96, no. 1, 1 February 2018 (2018-02-01), pages 881-894, XP036468890, ISSN: 0268-3768, DOI: 10.1007/S00170-017-1480-X.
US 2002/128780 A1 discloses a system comprising a plurality of comparison samples each having a reflectance spectrum and being configured to substantially simulate a color of a keratinous element having a reflectance system. The reflectance spectrum of each comparison sample may be substantially similar to the reflectance spectrum of a respective keratinous element such that the comparison sample and the keratinous element appear to an observer to have substantially the same color under at least two differing illuminants..

### Citation List

### Patent Literature

Patent Literature 1: Japanese Unexamined Patent Application Publication No. 2001-074556
Patent Literature 2: US 2002/128780 A1

### Technical Problem

The inventor has found the following problem as a result of examining a case where a skin color chart is captured by a camera and then a face authentication environment is determined using the acquired image of the skin color chart.

As described above, the skin color chart disclosed in Patent Literature 1 is used for evaluating skin color reproduction in a color photograph or the like, and includes an average Caucasoid skin color display part and an average Negroid skin color display part. When the face authentication environment is determined using this skin color chart, it is determined that the environment is suitable for face authentication, for example, if no blown-out highlights occur in the Caucasoid skin color display part and no blocked-up shadows occur in the Negroid skin color display part in the acquired image of the skin color chart.

However, even in the environment which it has been determined using the skin color chart disclosed in Patent Literature 1 is suitable for face authentication, face authentication may not be performed accurately. Specifically, even in the environment which it has been determined is suitable for face authentication, the environment may actually be too dark and blocked-up shadows may occur in the face image of a person whose skin is blacker than the average Negroid skin color display part in the skin color chart. Conversely, the environment may actually be too bright and blown-out highlights may occur in the face image of a person whose skin is whiter than the average Caucasoid skin color display part in the skin color chart.

In view of the problem described above, an object of the present disclosure is to provide a skin color chart that enables a more appropriate determination of a face authentication environment and a method for manufacturing the same.

### SUMMARY OF THE INVENTION

The present invention is defined in the independent claims. The dependent claims define embodiments of the invention.

### Advantageous Effects

According to the present disclosure, it is possible to provide a skin color chart that enables a more appropriate determination of a face authentication environment and a method for manufacturing the same.

### Brief Description of Drawings

Fig. 1 is a plan view showing a skin color chart according to a first example not falling under the scope of the present invention;
Fig. 2 is a graph showing an example of a spectral reflectance of a skin color of each of Negroid, Caucasoid, and Mongoloid;
Fig. 3 is a plan view showing a skin color chart according to an example embodiment;
Fig. 4 is a plan view showing a skin color chart according to a second example not falling under the scope of the present invention;
Fig. 5 is a plan view showing a skin color chart according to a third example not falling under the scope of the present invention; and
Fig. 6 is a plan view showing a skin color chart according to a fourth example not falling under the scope of the present invention.

### Description of Embodiments

Specific examples and embodiments will be described hereinafter in detail with reference to the drawings. The same or corresponding elements are denoted by the same reference symbols throughout the drawings, and redundant descriptions will be omitted as necessary for the clarification of the description.

### (First Example)

### <Structure of Skin color chart>

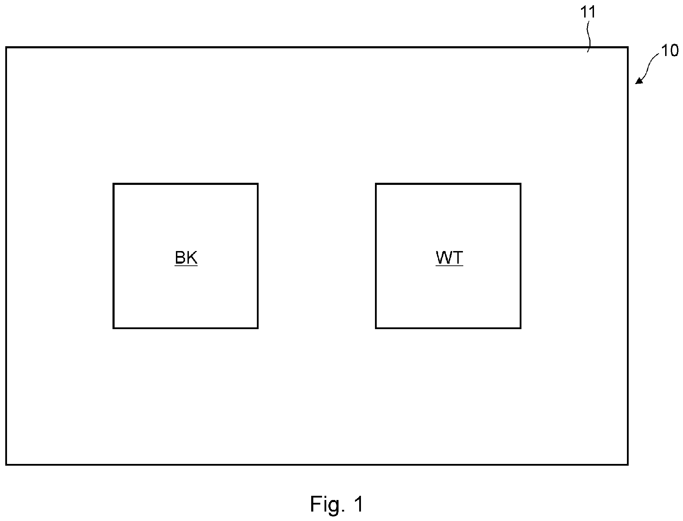

First, a skin color chart according to a first example will be described with reference to Fig. 1. Fig. 1 is a plan view showing the skin color chart according to the first example. A skin color chart 10 according to the first example shown in Fig. 1 is a chart for determining a face authentication environment.

As shown in Fig. 1, the skin color chart 10 according to the first example includes a substrate 11, a first skin color display part BK, and a second skin color display part WT.

The substrate 11 is made of, for example, cardboard, plastic, wood, metal, glass and combinations thereof, but is not limited to being made of any particular material. When the substrate 11 is made of cardboard, plastic, and wood, it is lightweight and thus can be easily carried. In the example shown in Fig. 1, the substrate 11 has a rectangular planar shape, but is not limited thereto. As an example, the width of the substrate 11 is about 200 mm and the length thereof is about 300 mm, but the size of the substrate 11 is not limited to a particular size. In order to prevent reflection, it is preferable that, for example, the color of the substrate 11 be black having a reflectance of 0, but the color of the substrate 11 is not limited to a particular color.

As shown in Fig. 1, the first skin color display part BK is formed on the substrate 11. The first skin color display part BK shows a skin color near the limit of the distribution of the skin colors of black people on the blackest part of the distribution. Specifically, colors can be defined using a CIE L*a*b* color space standardized by the International Commission on Illumination (CIE) in 1976. Lightness L* of a skin color in the first skin color display part BK expressed in the CIE L*a*b* color space satisfies 20≤L*≤37. An average skin color of Negroid is lighter than the aforementioned skin color and the value of L* is greater than 37. The lightness L* is more preferably 20≤L*≤29.

Further, chromaticity a* and chromaticity b* of the first skin color display part BK satisfy, for example, 8≤a*≤12 and 7≤b*≤10, respectively. The chromaticity a* and the chromaticity b* are more preferably 9≤a*≤11 and 8≤b*≤9, respectively.

Note that, in the example shown in Fig. 1, the first skin color display part BK has a square planar shape, but is not limited thereto.

As shown in Fig. 1, the second skin color display part WT is also formed on the substrate 11. The second skin color display part WT shows a skin color near the limit of the distribution of the skin colors of white people on the whitest part of the distribution. Specifically, lightness L* of a skin color in the second skin color display part WT expressed in the CIE L*a*b* color space satisfies 74≤L*≤81. An average skin color of Caucasoid is darker than the aforementioned skin color and the value of L* is smaller than 74. The lightness L* is more preferably 78≤L*≤81.

Further, chromaticity a* and chromaticity b* of the second skin color display part WT satisfy, for example, 10≤a*≤12 and 23≤b*≤25, respectively. The chromaticity a* and the chromaticity b* are more preferably a*=11 and b*=24, respectively.

Note that, in the example shown in Fig. 1, the first skin color display part BK has a square planar shape, but is not limited thereto.

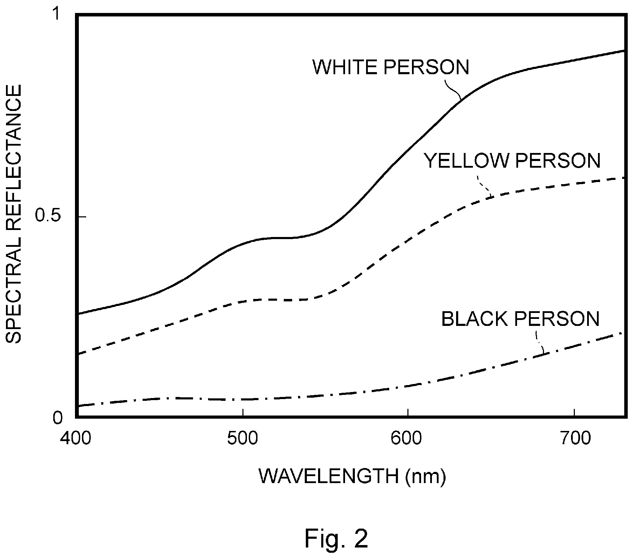

Note that Fig. 2 is a graph showing an example of a spectral reflectance of a skin color of each of Negroid, Caucasoid, and Mongoloid. In Fig. 2, the horizontal axis indicates wavelengths (nm), and the vertical axis indicates the spectral reflectance. As shown in Fig. 2, at each wavelength, the highest spectral reflectance is that of the Caucasoid, the second highest spectral reflectance is that of the Mongoloid, and the lowest spectral reflectance is that of the Negroid. For example, when measurement is performed using a spectrophotometric colorimeter, the values of L*, a*, and b* in the corresponding CIE L*a*b* color space are obtained together with data of a spectral reflectance like the one shown in Fig. 2. A large amount of data of L*, a*, and b* of the skin colors of black and white people are acquired and then a range of the aforementioned values can be determined.

When a face authentication environment is determined using the skin color chart 10, the skin color chart 10 is captured by a camera for face authentication (not shown). Then, in the captured image of the skin color chart 10, it can be determined that the environment is suitable for face authentication if blocked-up shadows do not occur in the first skin color display part BK and blown-out highlights do not occur in the second skin color display part WT.

As described above, in the skin color chart 10 according to this example, the lightness L* of the skin color in the first skin color display part BK satisfies 20≤L*≤37, and the first skin color display part BK shows the skin color near the limit of the distribution of the skin colors of black people on the blackest part of the distribution. Thus, it is extremely unlikely that a person whose skin is blacker than the first skin color display part BK will be a person on whom face authentication is to be performed. Therefore, in the environment which it has been determined using the skin color chart 10 according to this example is suitable for face authentication, it is also extremely unlikely that blocked-up shadows will occur in the face image and then face authentication cannot be performed.

On the other hand, the lightness L* of the skin color in the second skin color display part WT satisfies 74≤L*≤81, and the second skin color display part WT shows the skin color near the limit of the distribution of the skin colors of white people on the whitest part of the distribution. Thus, it is extremely unlikely that a person whose skin is whiter than the second skin color display part WT will be a person on whom face authentication is to be performed. Therefore, in the environment which it has been determined using the skin color chart 10 according to this example is suitable for face authentication, it is also extremely unlikely that blown-out highlights will occur in the face image and then face authentication cannot be performed.

As described above, by using the skin color chart 10 according to this example, it is possible to more appropriately determine a face authentication environment.

### <Method for Manufacturing Skin color chart>

Next, a method for manufacturing a skin color chart according to the first example will be described with reference to Fig. 1. The first skin color display part BK is formed on the substrate 11 and the second skin color display part WT is formed on the same. One of the first skin color display part BK and the second skin color display part WT may be formed first on the substrate 11, or these two display parts may be formed simultaneously.

Although a specific example of a method for manufacturing a skin color chart according to the first example will be described below, the method is not limited to this specific example.

First, the first skin color display part BK and the second skin color display part WT prepared in advance are stuck on a mount made of cardboard. For example, paints that have been adjusted to the colors of the first skin color display part BK and the second skin color display part WT are respectively applied to pieces of paper, whereby the first skin color display part BK and the second skin color display part WT can be prepared. The paint is, for example, a non-glossy lacquer paint, but is not limited to a particular paint.

Next, a black cardboard of the same size as that of the mount is prepared, and parts of the black cardboard corresponding to the first skin color display part BK and the second skin color display part WT that have been stuck on the mount are cut out. Then the black cardboard and the mount on which the first skin color display part BK and the second skin color display part WT have been stuck are bonded to each other. Note that the black cardboard has been processed so that the reflectance of the surface thereof becomes 0 (zero).

In this way, the skin color chart 10 can be manufactured. In the skin color chart 10 manufactured according to this specific example, the substrate 11 is formed of a mount and a black cardboard.

As described above, in the skin color chart 10 according to this example, the first skin color display part BK shows the skin color near the limit of the distribution of the skin colors of black people on the blackest part of the distribution, and the second skin color display part WT shows the skin color near the limit of the distribution of the skin colors of white people on the whitest part of the distribution. Thus, it is extremely unlikely that a person whose skin is blacker than the first skin color display part BK or a person whose skin is whiter than the second skin color display part WT will be a person on whom face authentication is to be performed. Therefore, in the environment which it has been determined using the skin color chart 10 according to this example is suitable for face authentication, it is also extremely unlikely that blocked-up shadows or blown-out highlights will occur in the face image and then face authentication cannot be performed. That is, by using the skin color chart 10 according to this example, it is possible to more appropriately determine a face authentication environment.

### (Example Embodiment)

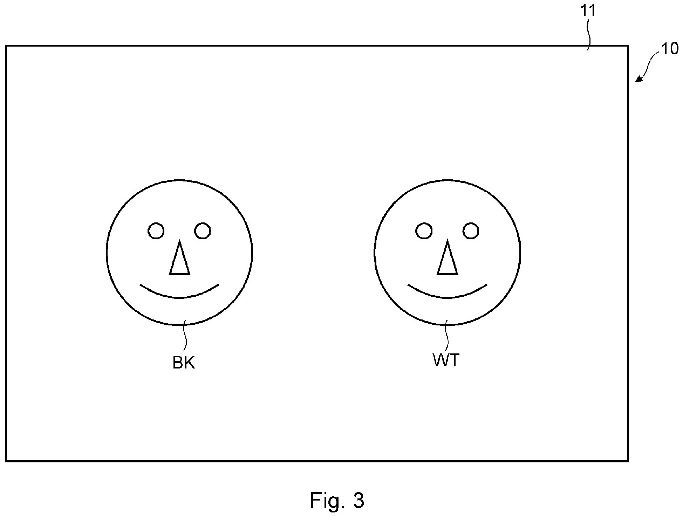

Next, a skin color chart according to an example embodiment will be described with reference to Fig. 3. Fig. 3 is a plan view showing the skin color chart according to the example embodiment.

In the skin color chart 10 according to the first example shown in Fig. 1, each of the first skin color display part BK and the second skin color display part WT is formed in a flat shape (formed so as to be flat). On the other hand, in the skin color chart 10 according to the example embodiment shown in Fig. 3, each of the first skin color display part BK and the second skin color display part WT is formed in a three-dimensional shape imitating a human face. That is, in each of the first skin color display part BK and the second skin color display part WT, projections and recesses imitating a human face are formed.

In a case in which the skin color chart 10 according to the example embodiment is used, for example, blocked-up shadows may occur in a recessed part of the face (e.g., a part of the face near the shadow formed by the nose) in the face image of Negroid, and hence there is a possibility that face authentication cannot be performed even in the environment which it has been determined is suitable for face authentication. Alternatively, for example, blown-out highlights may occur in a projection part of the face (e.g., a part of the face near the top of the nose) in the face image of Caucasoid, and hence there is a possibility that face authentication cannot be performed.

On the other hand, in a case in which the skin color chart 10 according to the example embodiment is used, when a face authentication environment is determined, it is possible to determine that the environment in which blocked-up shadows occur in the recessed part and the like of the first skin color display part BK is not suitable for face authentication. Further, it is possible to determine that the environment in which blown-out highlights occur in the projection part and the like of the second skin color display part WT is also not suitable for face authentication.

Therefore, by using the skin color chart 10 according to this example embodiment, it is possible to further appropriately determine a face authentication environment.

The structures other than the above ones are similar to those of the first example, and thus the descriptions thereof will be omitted.

### (Second Example)

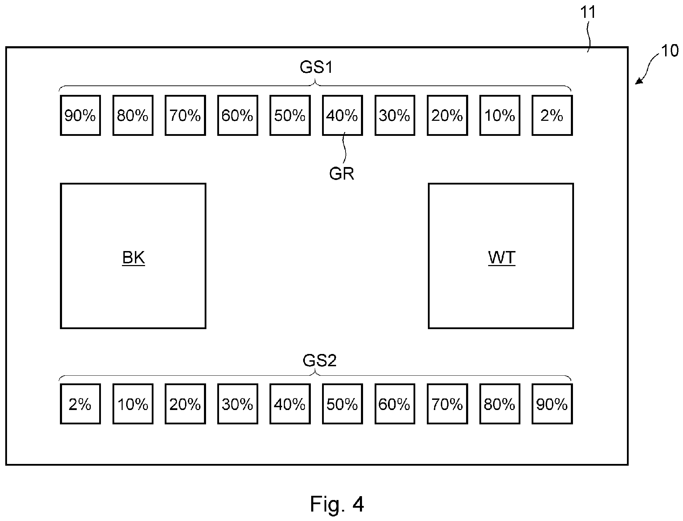

Next, a skin color chart according to a second example will be described with reference to Fig. 4. Fig. 4 is a plan view showing the skin color chart according to the second example.

As shown in Fig. 4, the skin color chart 10 according to this example includes, in addition to the first skin color display part BK and the second skin color display part WT, gray scale parts GS1 and GS2 formed of a plurality of gray display parts GR having different reflectances.

In the example shown in Fig. 4, each of the two gray scale parts GS1 and GS2 includes 10 of the gray display parts GR having reflectances of 2 to 90%. Specifically, the reflectances of the gray display parts GR are 2%, 10%, 20%, 30%, 40%, 50%, 60%, 70%, 80%, and 90%.

In the example shown in Fig. 4, in the gray scale parts GS1 and GS2, the 10 gray display parts GR are arranged in a row along the long side of the rectangular skin color chart 10. Further, the gray scale parts GS1 and GS2 are disposed so as to be opposed to each other with the first skin color display part BK and the second skin color display part WT interposed therebetween.

By using the gray scale parts GS 1 and GS2, it is possible, for example, to evaluate the dynamic range of the camera for face authentication (not shown) and adjust it.

Note that, in the example shown in Fig. 4, each of the gray display parts GR has a square planar shape, but is not limited thereto. Further, the number of gray display parts GR included in the gray scale parts GS1 and GS2 and the reflectance of each of the gray display parts GR may be determined as appropriate. Further, the number of gray scale parts may be one.

The structures other than the above ones are similar to those of the first example, and thus the descriptions thereof will be omitted. The example embodiment may be combined with the second example.

### (Third Example)

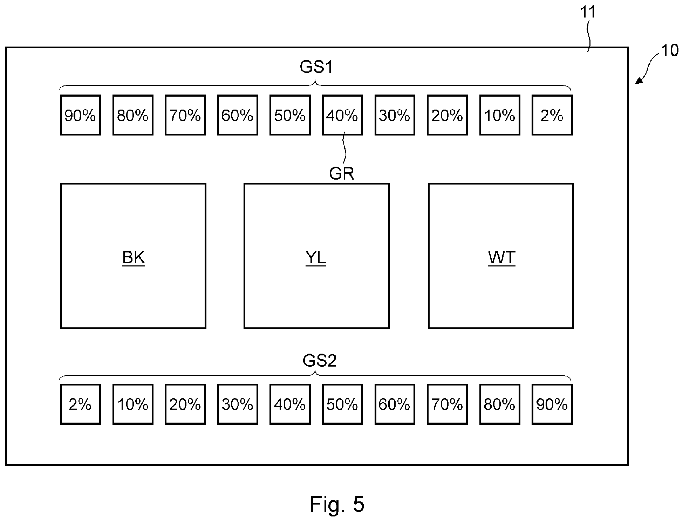

Next, a skin color chart according to a third example will be described with reference to Fig. 5. Fig. 5 is a plan view showing the skin color chart according to the third example.

As shown in Fig. 5, the skin color chart 10 according to this example includes a third skin color display part YL in addition to the skin color chart 10 according to the second example.

As shown in Fig. 5, the third skin color display part YL, like the first skin color display part BK and the second skin color display part WT, is formed on the substrate 11. The position where the third skin color display part YL is disposed is not limited to a particular position; in the example shown in Fig. 5, the third skin color display part YL is disposed between the first skin color display part BK and the second skin color display part WT.

The third skin color display part YL shows a skin color between the skin color in the first skin color display part BK and the skin color in the second skin color display part WT. The third skin color display part YL shows, for example, an average skin color of Mongoloid. Specifically, lightness L* of a skin color in the third skin color display part YL expressed in the CIE L*a*b* color space satisfies, for example, 62≤L*≤68. Further, chromaticity a* and chromaticity b* of the third skin color display part YL satisfy, for example, a*=11 and 18≤b*≤19, respectively.

By providing the third skin color display part YL, when a face authentication environment is being determined, it is possible to evaluate the environment in more detail than it is in the cases of the first and second examples and the example embodiment. Specifically, it can be understood that the environment in which blocked-up shadows occur in the third skin color display part YL in addition to the first skin color display part BK is blacker than the environment in which blocked-up shadows occur only in the first skin color display part BK. It can also be understood that the environment in which blown-out highlights occur in the third skin color display part YL in addition to the second skin color display part WT is brighter than the environment in which blown-out highlights occur only in the second skin color display part WT. Based on the above-described evaluations, for example, the position where a camera is installed, the orientation of the camera, and the brightness of a place where a face image is captured can be easily adjusted.

Note that, in the example shown in Fig. 5, the third skin color display part YL has a square planar shape, but is not limited thereto.

The structures other than the above ones are similar to those of the second example, and thus the descriptions thereof will be omitted. The example embodiment may be combined with the third example. Further, in the third example, the gray scale parts GS1 and GS2 may not be formed. That is, a structure in which the third skin color display part YL is added to the skin color chart 10 according to the first example may be employed.

### (Fourth Example)

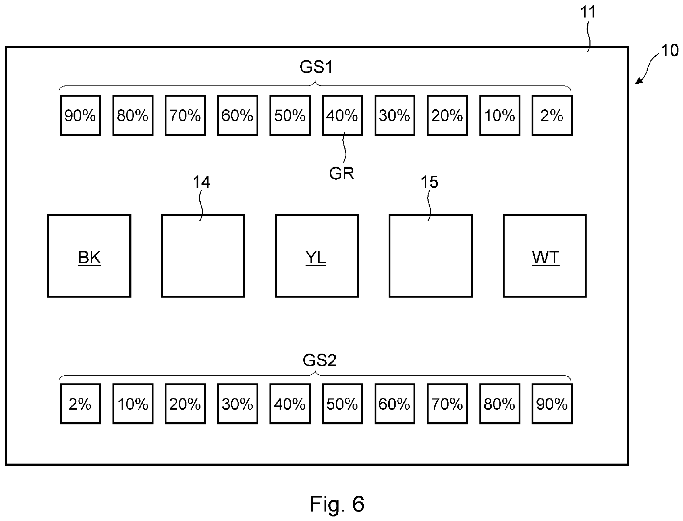

Next, a skin color chart according to a fourth example will be described with reference to Fig. 6. Fig. 6 is a plan view showing the skin color chart according to the fourth example.

As shown in Fig. 6, the skin color chart 10 according to this example includes a fourth skin color display part 14 and a fifth skin color display part 15 in addition to the skin color chart 10 according to the third example.

As shown in Fig. 6, the fourth skin color display part 14 and the fifth skin color display part 15 are also formed on the substrate 11. The position where the fourth skin color display part 14 is disposed and the position where the fifth skin color display part 15 is disposed are not limited to particular positions; in the example shown in Fig. 6, the fourth skin color display part 14 is disposed between the first skin color display part BK and the third skin color display part YL. Further, the fifth skin color display part 15 is disposed between the second skin color display part WT and the third skin color display part YL.

The fourth skin color display part 14 shows a skin color between the skin color in the first skin color display part BK and the skin color in the third skin color display part YL.

The fifth skin color display part 15 shows a skin color between the skin color in the second skin color display part WT and the skin color in the third skin color display part YL.

By providing the fourth skin color display part 14, when a face authentication environment is being determined, the environment can be evaluated in much more detail than it is in the case of the third example. Specifically, it is possible to distinguish the environment in which blocked-up shadows occur in the first skin color display part BK and the fourth skin color display part 14 from the environment in which blocked-up shadows occur only in the first skin color display part BK. Further, it is possible to distinguish the environment in which blocked-up shadows occur in the first skin color display part BK, the fourth skin color display part 14, and the third skin color display part YL from the environment in which blocked-up shadows occur only in the first skin color display part BK and the fourth skin color display part 14.

Similarly, by providing the fifth skin color display part 15, when a face authentication environment is being determined, the environment can be evaluated in much more detail than it is in the case of the fourth example embodiment. Specifically, it is possible to distinguish the environment in which blown-out highlights occur in the second skin color display part WT and the fifth skin color display part 15 from the environment in which blown-out highlights occur only in the second skin color display part WT. Further, it is possible to distinguish the environment in which blown-out highlights occur in the second skin color display part WT, the fifth skin color display part 15, and the third skin color display part YL from the environment in which blown-out highlights occur only in the second skin color display part WT and the fifth skin color display part 15.

Based on the above-described evaluations, for example, the position where a camera is installed, the orientation of the camera, and the brightness of a place where a face image is captured can be more easily adjusted.

Note that, in the example shown in Fig. 6, each of the fourth skin color display part 14 and the fifth skin color display part 15 has a square planar shape, but is not limited thereto. Further, the skin color chart 10 may include only one of the fourth skin color display part 14 and the fifth skin color display part 15.

Further, a plurality of fourth skin color display parts 14 showing skin colors different from each other may be provided in the skin color chart 10. Similarly, a plurality of fifth skin color display parts 15 showing skin colors different from each other may be provided in the skin color chart 10.

Further, in this example, the skin colors of the third skin color display part YL, the fourth skin color display part 14, and the fifth skin color display part 15 may show, for example, average skin colors in specific countries or regions.

The structures other than the above ones are similar to those of the third example, and thus the descriptions thereof will be omitted. The example embodiment may be combined with the fourth example. Further, in the fourth example, the gray scale parts GS1 and GS2 may not be formed. That is, a structure in which the third skin color display part YL, the fourth skin color display part 14, and the fifth skin color display part 15 are added to the skin color chart 10 according to the first example may be employed.

Although the present disclosure has been described with reference to the examples and embodiments, the present disclosure is not limited to the above-described examples and embodiments. Various changes that may be understood by those skilled in the art may be made to the configurations and details of the present disclosure within the scope of the amended claims.

### Reference Signs List

- 10: SKIN COLOR CHART
- 11: SUBSTRATE
- BK: FIRST SKIN COLOR DISPLAY PART
- WT: SECOND SKIN COLOR DISPLAY PART
- YL: THIRD SKIN COLOR DISPLAY PART
- 14: FOURTH SKIN COLOR DISPLAY PART
- 15: FIFTH SKIN COLOR DISPLAY PART
- GR: GRAY DISPLAY PART
- GS1, GS2: GRAY SCALE PART

## Claims

1. A skin color chart (10) , the skin color chart (10) comprising:
a substrate (11);
a first skin color display part (BK) configured to show a skin color of a Negroid, the first skin color display part (BK) being formed on the substrate (11); and
a second skin color display part (WT) configured to show a skin color of a Caucasoid, the second skin color display part (WT) being formed on the substrate (11), wherein
lightness L* of the first skin color display part in a CIE L*a*b* color space satisfies 20≤L*≤37, and
lightness L* of the second skin color display part in the CIE L*a*b* color space satisfies 74≤L*≤81, **characterized in that**
each of the first and the second skin color display parts is formed in a three-dimensional shape imitating a human face.

2. The skin color chart according to Claim 1, further comprising a plurality of gray display parts (GR) having different reflectances, the gray display parts being formed on the substrate (11).

3. The skin color chart according to any one of Claims 1 to 2, further comprising a third skin color display part (YL) configured to show a skin color between the skin color in the first skin color display part (BK) and the skin color in the second skin color display part (WT), the third skin color display part being formed on the substrate (11),
wherein lightness L* of the third skin color display part in the CIE L*a*b* color space satisfies 62≤L*≤68.

4. The skin color chart according to Claim 3, further comprising, on the substrate, at least one of:
a fourth skin color display part (14) configured to show a skin color between the skin color in the first skin color display part (BK) and the skin color in the third skin color display part (YL); and
a fifth skin color display part (15) configured to show a skin color between the skin color in the second skin color display part (WT) and the skin color in the third skin color display part (YL).

5. The skin color chart according to any one of Claims 1 to 4, wherein the substrate (11) is black.

6. A method for manufacturing a skin color chart (10), the method comprising:
forming, on a substrate (11), a first skin color display part (BK) configured to show a skin color of a Negroid; and
forming, on the substrate, a second skin color display part (WT) configured to show a skin color of a Caucasoid, wherein
lightness L* of the first skin color display part (BK) in a CIE L*a*b* color space satisfies 20≤L*≤37, and
lightness L* of the second skin color display part (WT) in the CIE L*a*b* color space satisfies 74≤L*≤81, **characterized in that**
each of the first and the second skin color display parts is formed in a three-dimensional shape imitating a human face.

7. The method according to Claim 6, further comprising forming a plurality of gray display parts (GR) having different reflectances on the substrate (11).

8. The method according to any one of Claims 6 to 7, further comprising forming, on the substrate (11), a third skin color display part (YT) configured to show a skin color between the skin color in the first skin color display part (BK) and the skin color in the second skin color display part (WT),
wherein lightness L* of the third skin color display part in the CIE L*a*b* color space satisfies 62≤L*≤68.

9. The method according to Claim 8, further comprising forming, on the substrate (11), at least one of:
a fourth skin color display part (14) configured to show a skin color between the skin color in the first skin color display part and the skin color in the third skin color display part; and
a fifth skin color display part (15) configured to show a skin color between the skin color in the second skin color display part and the skin color in the third skin color display part.

10. The method according to any one of Claims 6 to 9, wherein the substrate (11) is black.

## Patentansprüche

1. Hautfarbkarte (10), wobei die Hautfarbkarte (10) umfasst:
ein Substrat (11);
einen ersten Hautfarbanzeigeteil (BK), der konfiguriert ist, eine Hautfarbe eines Negroiden anzuzeigen, wobei der erste Hautfarbanzeigeteil (BK) auf dem Substrat (11) ausgebildet ist; und
einen zweiten Hautfarbanzeigeteil (WT), der konfiguriert ist, eine Hautfarbe eines Kaukasiden anzuzeigen, wobei der zweite Hautfarbanzeigeteil (WT) auf dem Substrat (11) ausgebildet ist, wobei
die Helligkeit L* des ersten Hautfarbanzeigeteils in einem CIE L*a*b* - Farbraum 20≤L*≤37 erfüllt, und
die Helligkeit L* des zweiten Hautfarbanzeigeteils in dem CIE L*a*b* - Farbraum 74≤L*≤81 erfüllt, **dadurch gekennzeichnet, dass**
jeder von dem ersten und dem zweiten Hautfarbanzeigeteil in einer dreidimensionalen Form ausgebildet ist, die ein menschliches Gesicht imitiert.

2. Hautfarbkarte nach Anspruch 1, ferner umfassend eine Vielzahl von grauen Anzeigeteilen (GR), die unterschiedliche Reflexionsgrade aufweisen, wobei die grauen Anzeigeteile auf dem Substrat (11) ausgebildet sind.

3. Hautfarbkarte nach einem der Ansprüche 1 bis 2, ferner umfassend einen dritten Hautfarbanzeigeteil (YL), der konfiguriert ist, eine Hautfarbe zwischen der Hautfarbe in dem ersten Hautfarbanzeigeteil (BK) und der Hautfarbe in dem zweiten Hautfarbanzeigeteil (WT) anzuzeigen, wobei der dritte Hautfarbanzeigeteil (YL) auf dem Substrat (11) ausgebildet ist, wobei die Helligkeit L* des dritten Hautfarbanzeigeteils in dem CIE L*a*b*-Farbraum 62≤L*≤68 erfüllt.

4. Hautfarbkarte nach Anspruch 3, ferner umfassend, auf dem Substrat, mindestens einen von: einem vierten Hautfarbanzeigeteil (14), der konfiguriert ist, eine Hautfarbe zwischen der Hautfarbe in dem ersten Hautfarbanzeigeteil (BK) und der Hautfarbe in dem dritten Hautfarbanzeigeteil (YL) anzuzeigen; und einem fünften Hautfarbanzeigeteil (15), der konfiguriert ist, eine Hautfarbe zwischen der Hautfarbe in dem zweiten Hautfarbanzeigeteil (WT) und der Hautfarbe in dem dritten Hautfarbanzeigeteil (YL) anzuzeigen.

5. Hautfarbkarte nach einem der Ansprüche 1 bis 4, wobei das Substrat (11) schwarz ist.

6. Verfahren zur Herstellung einer Hautfarbkarte (10), wobei das Verfahren umfasst:
Ausbilden, auf einem Substrat (11), eines ersten Hautfarbanzeigeteils (BK), der konfiguriert ist, eine Hautfarbe eines Negroiden anzuzeigen; und
Ausbilden, auf dem Substrat, eines zweiten Hautfarbanzeigeteils (WT), der konfiguriert ist, eine Hautfarbe eines Kaukasiden anzuzeigen, wobei
die Helligkeit L* des ersten Hautfarbanzeigeteils (BK) in einem CIE L*a*b*-Farbraum 20≤L*≤37 erfüllt, und
die Helligkeit L* des zweiten Hautfarbanzeigeteils (WT) in dem CIE L*a*b*-Farbraum 74≤L*≤81 erfüllt, **dadurch gekennzeichnet, dass**
jeder von dem ersten und dem zweiten Hautfarbanzeigeteil in einer dreidimensionalen Form ausgebildet wird, die ein menschliches Gesicht imitiert.

7. Verfahren nach Anspruch 6, ferner umfassend das Ausbilden einer Vielzahl von grauen Anzeigeteilen (GR), die unterschiedliche Reflexionsgrade aufweisen, auf dem Substrat (11).

8. Verfahren nach einem der Ansprüche 6 bis 7, ferner umfassend das Ausbilden, auf dem Substrat (11), eines dritten Hautfarbanzeigeteils (YL), der konfiguriert ist, eine Hautfarbe zwischen der Hautfarbe in dem ersten Hautfarbanzeigeteil (BK) und der Hautfarbe in dem zweiten Hautfarbanzeigeteil (WT) anzuzeigen,
wobei die Helligkeit L* des dritten Hautfarbanzeigeteils in dem CIE L*a*b*-Farbraum 62≤L*≤68 erfüllt.

9. Verfahren nach Anspruch 8, ferner umfassend das Ausbilden, auf dem Substrat (11), von mindestens einem von:
einem vierten Hautfarbanzeigeteil (14), der konfiguriert ist, eine Hautfarbe zwischen der Hautfarbe in dem ersten Hautfarbanzeigeteil und der Hautfarbe in dem dritten Hautfarbanzeigeteil anzuzeigen; und
einem fünften Hautfarbanzeigeteil (15), der konfiguriert ist, eine Hautfarbe zwischen der Hautfarbe in dem zweiten Hautfarbanzeigeteil und der Hautfarbe in dem dritten Hautfarbanzeigeteil anzuzeigen.

10. Verfahren nach einem der Ansprüche 6 bis 9, wobei das Substrat (11) schwarz ist.

## Revendications

1. Nuancier de couleurs de peau (10), le nuancier de couleurs de peau (10) comportant :
un substrat (11) ;
une première partie d'affichage de couleur de peau (BK) configurée pour présenter une couleur de peau d'une personne noire, la première partie d'affichage de couleur de peau (BK) étant formée sur le substrat (11) ; et
une deuxième partie d'affichage de couleur de peau (WT) configurée pour présenter une couleur de peau d'une personne caucasienne, la deuxième partie d'affichage de couleur de peau (WT) étant formée sur le substrat (11), dans lequel
une luminosité L* de la première partie d'affichage de couleur de peau dans un espace colorimétrique CIE L*a*b* satisfait 20 ≤ L* ≤ 37, et
une luminosité L* de la deuxième partie d'affichage de couleur de peau dans l'espace colorimétrique CIE L*a*b* satisfait 74 ≤ L* ≤ 81, **caractérisé en ce que**
chacune des première et deuxième parties d'affichage de couleur de peau est formée sous une forme tridimensionnelle imitant un visage humain.

2. Nuancier de couleurs de peau selon la revendication 1, comportant en outre une pluralité de parties d'affichage de gris (GR) présentant différentes réflectances, les parties d'affichage de gris étant formées sur le substrat (11).

3. Nuancier de couleurs de peau selon l'une quelconque des revendications 1 à 2, comportant en outre une troisième partie d'affichage de couleur de peau (YL) configurée pour présenter une couleur de peau entre la couleur de peau dans la première partie d'affichage de couleur de peau (BK) et la couleur de peau dans la deuxième partie d'affichage de couleur de peau (WT), la troisième partie d'affichage de couleur de peau étant formée sur le substrat (11),
dans lequel une luminosité L* de la troisième partie d'affichage de couleur de peau dans l'espace colorimétrique CIE L*a*b* satisfait 62 ≤ L* ≤ 68.

4. Nuancier de couleurs de peau selon la revendication 3, comportant en outre, sur le substrat, au moins une parmi :
une quatrième partie d'affichage de couleur de peau (14) configurée pour présenter une couleur de peau entre la couleur de peau dans la première partie d'affichage de couleur de peau (BK) et la couleur de peau dans la troisième partie d'affichage de couleur de peau (YL) ; et
une cinquième partie d'affichage de couleur de peau (15) configurée pour présenter une couleur de peau entre la couleur de peau dans la deuxième partie d'affichage de couleur de peau (WT) et la couleur de peau dans la troisième partie d'affichage de couleur de peau (YL).

5. Nuancier de couleurs de peau selon l'une quelconque des revendications 1 à 4, dans lequel le substrat (11) est noir.

6. Procédé de fabrication d'un nuancier de couleurs de peau (10), le procédé comportant :
la formation, sur un substrat (11), d'une première partie d'affichage de couleur de peau (BK) configurée pour présenter une couleur de peau d'une personne noire ; et
la formation, sur le substrat, d'une deuxième partie d'affichage de couleur de peau (WT) configurée pour présenter une couleur de peau d'une personne caucasienne, dans lequel
une luminosité L* de la première partie d'affichage de couleur de peau (BK) dans un espace colorimétrique CIE L*a*b* satisfait 20 ≤ L* ≤ 37, et
une luminosité L* de la deuxième partie d'affichage de couleur de peau (WT) dans l'espace colorimétrique CIE L*a*b* satisfait 74 ≤ L* ≤ 81, **caractérisé en ce que**
chacune des première et deuxième parties d'affichage de couleur de peau est formée sous une forme tridimensionnelle imitant un visage humain.

7. Procédé selon la revendication 6, comportant en outre la formation d'une pluralité de parties d'affichage de gris (GR) présentant différentes réflectances sur le substrat (11).

8. Procédé selon l'une quelconque des revendications 6 à 7, comportant en outre la formation, sur le substrat (11), d'une troisième partie d'affichage de couleur de peau (YT) configurée pour présenter une couleur de peau entre la couleur de peau dans la première partie d'affichage de couleur de peau (BK) et la couleur de peau dans la deuxième partie d'affichage de couleur de peau (WT),
dans lequel une luminosité L* de la troisième partie d'affichage de couleur de peau dans l'espace colorimétrique CIE L*a*b* satisfait 62 ≤ L* ≤ 68.

9. Procédé selon la revendication 8, comportant en outre la formation, sur le substrat (11), d'au moins une parmi :
une quatrième partie d'affichage de couleur de peau (14) configurée pour présenter une couleur de peau entre la couleur de peau dans la première partie d'affichage de couleur de peau et la couleur de peau dans la troisième partie d'affichage de couleur de peau ; et
une cinquième partie d'affichage de couleur de peau (15) configurée pour présenter une couleur de peau entre la couleur de peau dans la deuxième partie d'affichage de couleur de peau et la couleur de peau dans la troisième partie d'affichage de couleur de peau.

10. Procédé selon l'une quelconque des revendications 6 à 9, dans lequel le substrat (11) est noir.
